# EUROPÄISCHE PATENTSCHRIFT

(11) **EP 1 309 852 B1**
(45) Veröffentlichungstag und Bekanntmachung des Hinweises auf die Patenterteilung: **22.07.2009**
(21) Anmeldenummer: 01964911.0
(22) Anmeldetag: 16.08.2001
(51) Int. Cl.: G01N 27/417

(54) **GASSENSOR, INSBESONDERE LAMBDA-SONDE**
GAS SENSOR, ESPECIALLY A LAMBDA PROBE
CAPTEUR DE GAZ, NOTAMMENT SONDE LAMBDA

(30) Priorität: 18.08.2000 DE 10040505
(43) Veröffentlichungstag der Anmeldung: 14.05.2003
(73) Patentinhaber: ROBERT BOSCH GMBH, 70442 Stuttgart (DE)
(72) Erfinder: SCHEER, Heiner, 89180 Berghuelen (DE); RENZ, Hans-Joerg, 70771 Leinfelden-Echterdingen (DE); RIEGEL, Johann, 74321 Bietigheim-Bissingen (DE); DIEHL, Lothar, 70499 Stuttgart (DE); THIEMANN-HANDLER, Sabine, 70435 Stuttgart (DE)
(86) Internationale Anmeldenummer: PCT/DE2001/003150
(87) Internationale Veröffentlichungsnummer: WO 2002/014660

(56) Entgegenhaltungen:
- EP-A- 0 959 348
- US-A- 4 798 693
- US-A- 4 880 519
- US-A- 5 169 512
- US-A- 5 314 604
- US-A- 5 421 984

## Beschreibung

### Stand der Technik

Die Erfindung bezieht sich auf Gassensoren, insbesondere Lambda-Sonden, mit als gesintertes Keramik-Laminat ausgebildetem Körper und darin innerhalb einer Schicht des Laminates angeordnetem Referenzluftkanal, auf dessen einer Seite eine elektrische Widerstandsheizung und auf dessen anderer Seite eine Elektrodenanordnung vorgesehen ist, welche zumindest eine innenseitig einer Begrenzungswand des Referenzluftkanals angeordnete, zumindest bereichsweise für Gase permeable Referenzelektrode und eine vom zu sensierenden Gas beaufschlagte Nernstelektrode aufweist, die ebenfalls zumindest bereichsweise für Gase permeabel ausgebildet und von der Referenzelektrode durch eine für Ionen, insbesondere Sauerstoffionen, leitfähige und permeable Festelektrolytschicht getrennt ist, wobei die Elektroden an Leiterbahnen angeschlossen sind, die sich im wesentlichen in Richtung des Referenzluftkanals erstrecken.

Abgassysteme moderner Verbrennungsmotoren sind insbesondere bei Kraftfahrzeugen heute regelmäßig mit Katalysatoren versehen, um schädliche Abgase in unschädliche Reaktionsprodukte umzusetzen. Für eine gute Funktion der Katalysatoren ist es notwendig, daß dem Motor Luft und Kraftstoff in einem vorgegebenen Verhältnis zugeführt wird. Die dafür vorgesehenen Motorsteuerungen sind auf ihrer Eingangsseite mit einer sogenannten Lambda-Sonde verbunden, deren Signale die Zusammensetzung der Abgase wiedergeben und damit der Motorsteuerung ermöglichen, das Verhältnis von Kraftstoff und Verbrennungsluft in einer für den Katalysator optimalen Weise einzuregeln.

In diesen Zusammenhang sind zwei Konzepte bekannt.

Bei dem einen Konzept wird eine stöchiometrische Verbrennung angestrebt, d.h. die Sauerstoffmenge in der Verbrennungsluft entspricht genau dem Sauerstoffbedarf für eine vollständige Verbrennung des zugeführten Kraftstoffes. Der Betrieb des Motors erfolgt also weder mit Sauerstoffüberschuß (λ > 1) noch mit Sauerstoffunterschuß (λ < 1)vor. Diese Betriebsweise kann dementsprechend durch λ = 1 charakterisiert werden.

Für diese stöchiometrische Verbrennung genügen bei der Abgassensierung schmalbandig arbeitende Lambda-Sonden, bei denen die Nernstelektrode weitestgehend unmittelbar vom Abgas beaufschlagt wird.

Hier wird von der Motorsteuerung der Effekt ausgenutzt, daß eine zwischen der Referenzelektrode und der Nernstelektrode abgreifbare, durch Diffusion von Sauerstoff-Ionen erzeugte elektrische Spannung ihren Wert in der Umgebung von λ = 1 sehr stark ändert und dementsprechend ein Signal zur Verfügung steht, welches eine Abweichung von der gewünschten Betriebsweise mit stöchiometrischer Verbrennung sowohl in Richtung einer Betriebsweise mit Sauerstoffunterschuß als auch in Richtung einer Betriebsweise mit Sauerstoffüberschuß deutlich anzeigt.

Derartige Sensoren werden beispielsweise in der DE 44 01 749 A1 dargestellt.

Bei dem anderen Konzept wird ein überwiegender Betrieb des Verbrennungsmotors mit Sauerstoffüberschuß bei der Verbrennung angestrebt, weil dadurch der Kraftstoffverbrauch deutlich gesenkt werden kann. Bei einer Verbrennung mit Sauerstoffüberschuß entstehen jedoch schädliche Stickstoffoxide, die nur für eine begrenzte Zeitspanne von sog. Speicherkatalysatoren im Abgasstrang des Fahrzeugmotors aufgenommen werden können. Jeweils vor Erschöpfung der Aufnahmefähigkeit der Speicherkatalysatoren muß dann der Betrieb des Motors kurzfristig auf eine Verbrennung mit Sauerstoffunterschuß umgesteuert werden, um die zuvor im Katalysator gespeicherten Stickstoffoxide durch die nunmehr in den Abgasstrang gelangenden unvollständig verbrannten Kraftstoffbestandteile zu Stickstoff reduzieren zu können. Hier muß die Motorsteuerung also den Verbrennungsmotor ständig zwischen einer zeitlich überwiegenden Betriebsweise, bei der die Werte von λ oberhalb von 1 liegen, und einer relativ kurzzeitigen Betriebsweise, bei der die Werte von λ unterhalb von 1 liegen, intermittierend umgesteuert werden.

Für eine derartige intermittierende Betriebsweise mit stark wechselnden Werten von λ sind breitbandig arbeitende Lambda-Sonden notwendig.

Bei derartigen Lambda-Sonden ist die Nernstelektrode in einer gesonderten Kammer angeordnet, welche mit dem Abgasstrom über eine im Körper der Sonde angeordnete Diffusionsstrecke kommuniziert. Innerhalb dieser Kammer ist desweiteren eine innere Pumpelektrode angeordnet, die mit der Nernstelektrode elektrisch verbunden sein kann und im übrigen durch eine Festelektrolytschicht hindurch mit einer äußeren Pumpelektrode zusammenwirkt, die dem Abgasstrom weitestgehend unmittelbar ausgesetzt ist. Wird zwischen die beiden Pumpelektroden, die beide zumindest bereichsweise für Gase permeabel ausgebildet sind, eine externe elektrische Spannung angelegt, so wird zwischen den Pumpelektroden ein Sauerstoff-Ionenstrom erzeugt, dessen Richtung von der Polarität der angelegten Spannung abhängt und dessen Stärke von der elektrischen Spannungsdifferenz sowie der Differenz der Sauerstoffkonzentrationen an den Pumpenelektroden bestimmt wird. Dieser Sauerstoff-Ionenstrom steuert den Diffusionsstrom der Abgase in die Diffusionskammer entsprechend. Die externe elektrische Spannung zwischen den Pumpelektroden bzw. der zwischen den Pumpelektroden aufgrund des Sauerstoff-Ionenstromes auftretende elektrische Strom werden nun mittels eines Reglers so eingestellt, daß zwischen der Referenzelektrode und der Nernstelektrode immer eine elektrische Spannung mit vorgegebenem Sollwert aufrecht erhalten bleibt. Damit sind Polarität und Stärke des zwischen den Pumpelektroden auftretenden elektrischen Stromes ein Signal, welches mit der Zusammensetzung der Abgase und damit mit den λ-Werten korreliert ist.

Derartige Sonden werden beispielsweise in der DE 37 44 206 A1 dargestellt.

Durch Alterungsprozesse sowie Verschmutzungen verändern sich die Eigenschaften der vorgenannten Gassensoren.

In der US 4798693 ist vorgesehen, daß die den Elektroden zugeordneten Leiterbahnen in Draufsicht auf die Schichtebenen des Laminates zumindest teilweise neben dem Referenzluftkanal angeordnet sind.

### Vorteile der Erfindung

Die Erfindung beruht auf dem allgemeinen Gedanken, den bei bzw. vor der Sinterung des Sondenkörpers auf das Laminat ausgeübten Preßdruck zur Verdichtung der Gefügestruktur der Leiterbahnen auszunutzen und in diesem Zusammenhang die auf die Leiterbahnen ausgeübten Druckkräfte dadurch wirksam zu erhöhen, daß die Leiterbahnen in Draufsicht ohne Überdeckung mit Hohlräumen im Laminat angeordnet werden. Im Ergebnis wird damit ein geringerer elektrischer Widerstand der Leiterbahnen sowie eine höhere Beständigkeit der Leiterbahnen gegen Alterungserscheinungen erreicht, mit der Folge, daß die Veränderung der elektrischen Eigenschaften der Sonde bei zunehmendem Alter deutlich vermindert wird.

Erfindungsgemäß ist vorgesehen, dass die innere Pumpelektrode eine Fläche aufweist, die größer als der Grundriß der zwischen Nernstelektrode und innerer Pumpelektrode angeordneten Gaskammer ist.

In diesem Zusammenhang hat sich insbesondere als vorteilhaft herausgestellt, wenn die innere Pumpelektrode an einem der jeweils zugeordneten Leiterbahn diametral gegenüberliegenden Bereich, d.h. zum heißen Ende des Sondenkörpers hin, über den Grundriß der Gaskammer hinausreicht.

Des weiteren hat sich für gleichbleibende elektrische Eigenschaften als vorteilhaft erwiesen, wenn die Leiterbahnen eine vergleichsweise große Schichtdicke aufweisen. Dazu können die Leiterbahnen drucktechnisch mit relativ grobmaschigen Sieben hergestellt werden (beispielsweise Siebe mit 250 mesh).

Darüber hinaus können die Leiterbahnen auch als Doppelschicht gedruckt werden.

Schließlich kann das Druckmaterial für die Leiterbahnen einen besonders hohen Anteil elektrisch leitfähiger Partikel, insbesondere auf der Grundlage von Platin, aufweisen.

### Zeichnungen

Ausführungsbeispiele erfindungssgemäßer Lambda-Sonden sind in den Zeichnungen dargestellt und werden nachfolgend näher erläutert.

### Dabei zeigen

- Fig. 1: einen der Schnittlinie I-I in den Fig. 2 und 3 entsprechenden Querschnitt einer breitbandig arbeitenden Lambda-Sonde im Bereich des in den Abgasstrom hineinragenden heißen Endes des Sondenkörpers,
- Fig. 2 und 3: Draufsichten entsprechend den Pfeilen II und III in Fig. 1 auf verschiedene Schichten des Laminates mit Elektroden sowie zugeordneten Leiterbahnen und
- Fig. 4: einen Längsschnitt eines Teiles der Sonde entsprechend der Schnittlinie IV-IV in Fig. 1.

### Beschreibung der Ausführungsbeispiele

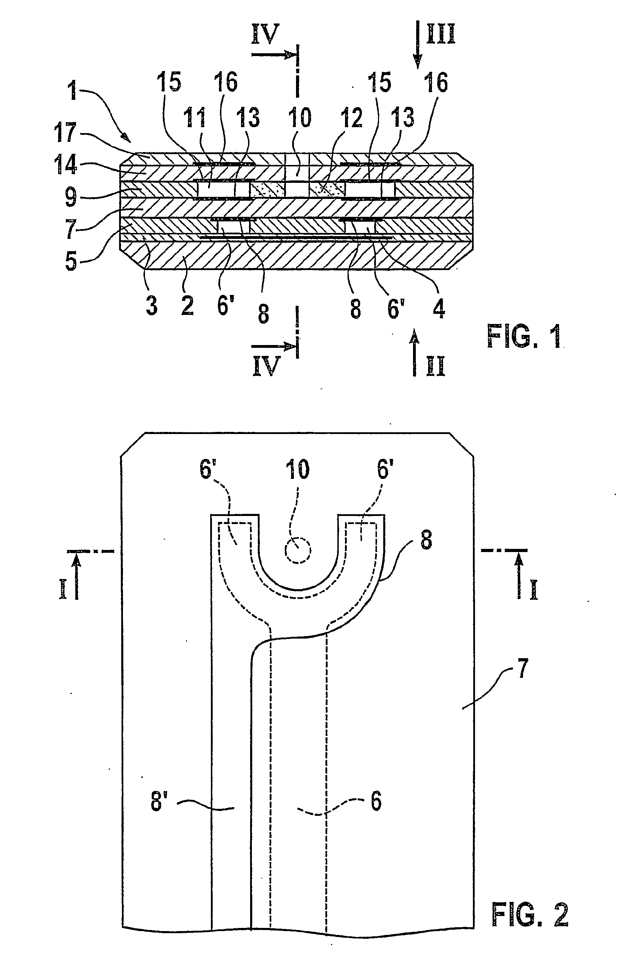

Gemäß Fig. 1 besitzt die dargestellte Lambda-Sonde einen Körper 1, welcher als keramisches Laminat ausgebildet ist. Die Schichten des Laminates werden im grünen Zustand aufeinander aufgelegt bzw. aufgetragen. Durch nachfolgende Sinterung, die nach oder unter gleichzeitiger Pressung des Laminates erfolgen kann, wird dann ein keramisch harter Körper 1 erzeugt.

Im Beispiel der Fig. 1 ist eine untere Schicht 2 in Form einer dickeren Folie aus Zirkonoxid vorgesehen. Über dieser liegt eine elektrisch isolierende Doppelschicht 3, in der eine elektrische Widerstandsheizung 4 sowie zugehörige Leiterbahnen zur elektrischen Stromzuführung eingebettet sind. Darüber liegt eine durch Siebdruck erzeugte und strukturierte Schicht 5 aus z.B. Zirkonoxidpaste. Innerhalb dieser Schicht ist ein Referenzluftkanal 6 ausgespart, dessen Grundriss in Fig. 2 beispielhaft dargestellt ist und weiter unten noch näher erläutert wird. Wie dargestellt kann dieser Referenzluftkanal 6 im Bereich der Schnittebene der Fig. 1 zwei miteinander kommunizierende Endbereiche 6' besitzen.

Gegebenenfalls kann die Schicht 5 auch durch eine Folie gebildet sein, in der der Kanal 6 ausgestanzt ist.

Über der Schicht 5 liegt eine Festelektrolyt-Schicht 7, beispielsweise in Form einer Folie aus Zirkonoxid, dem Yttriumoxid beigefügt ist. Zumindest im Bereich der Endbereiche 6' des Referenzluftkanales 6 ist auf der dem Referenzluftkanal 6 zugewandten Seite der Schicht 7 bzw. zwischen den Schichten 5 und 7 eine für Gase permeable, schichtförmige Referenzelektrode 8 aus porösem Platinmaterial angeordnet, die über eine daran anschließende schichtförmige Leiterbahn 8' (vgl. Fig. 2) mit einem weiter unten erläuterten Anschlußkontakt am Körper 1 verbunden ist.

Oberhalb der Festelektrolyt-Schicht 8 liegt eine dünne, drucktechnisch strukturierte Schicht 9, welche beispielsweise wiederum aus Zirkonoxidpaste hergestellt ist. Diese Schicht 9 besitzt eine große Aussparung, welche zentrisch zu einem, den Körper 1 senkrecht zu dessen Schichten durchsetzenden Abgas-Zutrittsloch 10 angeordnet ist. Innerhalb der genannten Aussparung ist unter Freilassung eines Ringraumes 11 poröses Material 12 abgeschieden. Das Zutrittsloch 10 kann, wie dargestellt, als Sackloch oder abweichend von der Darstellung als eine den Körper 1 vollständig durchsetzende Öffnung ausgebildet sein.

Im Bereich des Ringraumes 11 trägt die Festelektrolytschicht 7 eine für Gase permeable, schichtförmige Nernstelektrode 13 aus porösem Platinmaterial.

Über der Schicht 9 bzw. dem porösen Material 12 liegt eine weitere Festelektrolyt-Schicht 14, z.B. in Form einer Folie aus Zirkonoxid, dem Ytriumoxid beigemengt ist. Diese Schicht 14 trägt auf ihrer dem Ringraum 11 zugewandten Seite sowie auf ihrer vom Ringraum 11 abgewandten Seite für Gase permeable innere und äußere Pumpelektroden 15 und 16 aus zumindest bereichsweise porösem Platinmaterial, wobei diese Elektroden 15 und 16 so geformt sind, daß sie in Draufsicht auf die Schichten des Körpers 1 den Ringraum 11 zumindest im wesentlichen überdecken. Über der Schicht 14 liegt noch eine gasdurchlässige Schutzschicht 17.

Gegebenenfalls kann auf die Schicht 7 zusätzlich ein Positivbild des Referenzluftkanales 6 sowie seiner Endstücke 6' und Mündungen 6" mit einem Material aufgedruckt werden, welches bei der Sinterung des Körpers 1 aufgelöst wird bzw. wegbrennt oder eine poröse, gut gasdurchlässige Struktur bildet.

Grundsätzlich ist es auch möglich, die Schicht 3 spiegelbildlich zur Schicht 7 mit dem Material der Schicht 5 und gegebenenfalls auch mit dem für das Positivbild des Referenzluftkanales 6 sowie seiner Teile 6' und 6" vorgesehenen Material zu bedrucken. Auf diese Weise kann die Schicht 5 mit erhöhter Dicke hergestellt werden.

Die vorangehend beschriebene Lambda-Sonde funktioniert wie folgt:

Das das Abgas-Zutrittsloch 10 aufweisende Ende des Körpers 1 ist im Abgasstrom bzw. in einem mit dem Abgasstrom eines Verbrennungsmotors kommunizierenden Bereich angeordnet, während das andere Ende des Körpers 1 von Referenzluft, in der Regel von der Atmosphäre, beaufschlagt wird.

Über den Referenzluftkanal 6 bzw. seine Mündungen 6" gelangt Referenzluft bis in die Endstücke 6' des Referenzluftkanales. Über das Abgas-Zutrittsloch 10 gelangt Abgas zum porösen Material 12, durch das das Abgas in den Ringraum 11 diffundiert.

Wenn das abgasseitige Ende des Körpers 1 mittels der elektrischen Widerstandsheizung 4 hinreichend beheizt wird, kann zwischen der Referenzelektrode 8 und der Nernstelektrode 13 und damit zwischen den Durchkontaktierungen 19 und 20 eine elektrische Spannung abgegriffen werden, deren Maß von den Sauerstoff-Partialdrücken innerhalb der Endstücke 6' des Referenzluftkanales sowie innerhalb des Ringraumes 11 abhängt. Hierbei wird der Effekt ausgenutzt, daß die Festelektrolyt-Schicht 7 Sauerstoff-Ionen leitet und das Platinmaterial der vorgenannten Elektroden 8 und 13 die Bildung dieser Sauerstoff-Ionen fördert bzw. ermöglicht, mit der Folge, daß in der Festelektrolyt-Schicht 7 eine vom Sauerstoff-Partialdruck an den Elektroden 8 und 13 abhängige elektrische Potentialdifferenz auftritt, die zu einer entsprechenden Ionen-Wanderung führt. Diese Patentialdifferenz wird auch als Nernstspannung bezeichnet.

Der Sauerstoff-Partialdruck im Ringraum 11 kann dadurch gesteuert werden, daß zwischen die Pumpelektroden 15 und 16 eine externe elektrische Spannung mit steuerbarer Polarität angelegt wird. Die entsprechende Spannungsquelle wird an nicht dargestellte Durchkontaktierungen bzw. Kontakte angeschlossen, die mit den Pumpelektroden 15 und 16 elektrisch verbunden sind.

Hier wird wiederum der Effekt ausgenutzt, daß das Platinmaterial der Elektroden 15 und 16 zur Bildung von Sauerstoff-Ionen führt und dann durch die externe elektrische Spannung zwischen den Elektroden 15 und 16 ein durch die Festelektrolyt-Schicht 14 fließender Sauerstoff-Ionenstrom mit von der elektrischen Spannung und deren Polarität abhängiger Stärke und Richtung erzeugt wird. Damit wird zwischen den Pumpelektroden 15 und 16 ein elektrisches Signal abgreifbar, z.B. kann durch Erfassung von Spannung und Stromstärke der elektrische Wiederstand des über die Pumpelektroden führenden Stromkreises bestimmt werden.

Nunmehr werden die elektrische Spannung und damit auch der elektrische Strom zwischen den Pumpelektroden 15 und 16 mittels eines Reglers so gesteuert, daß die zwischen der Referenzelektrode 8 und der Nernstelektrode 13 abgreifbare elektrische Spannung und damit der Sauerstoff-Partialdruck im Ringraum 11 immer einem festgelegten Sollwert entspricht. Damit ist der zwischen den Pumpelektroden 15 und 16 abgreifbare elektrische Strom ein Maß für den Sauerstoffgehalt der Abgase relativ zur Referenzluft.

Wenn die äußere Pumpelektrode 16 gegenüber der inneren Pumpelektrode 15 auf elektrisch positivem Potential liegt, liegen Betriebsverhältnisse mit λ > 1 vor. Bei umgekehrter Polarität liegen Betriebsverhältnisse mit λ < 1 vor, wobei das Maß des zwischen den Elektroden 15 und 16 abgreifbaren elektrischen Widerstandes mit dem Maß von λ korreliert ist.

Die Werte von λ können in einem großen Wertebereich erfaßt werden.

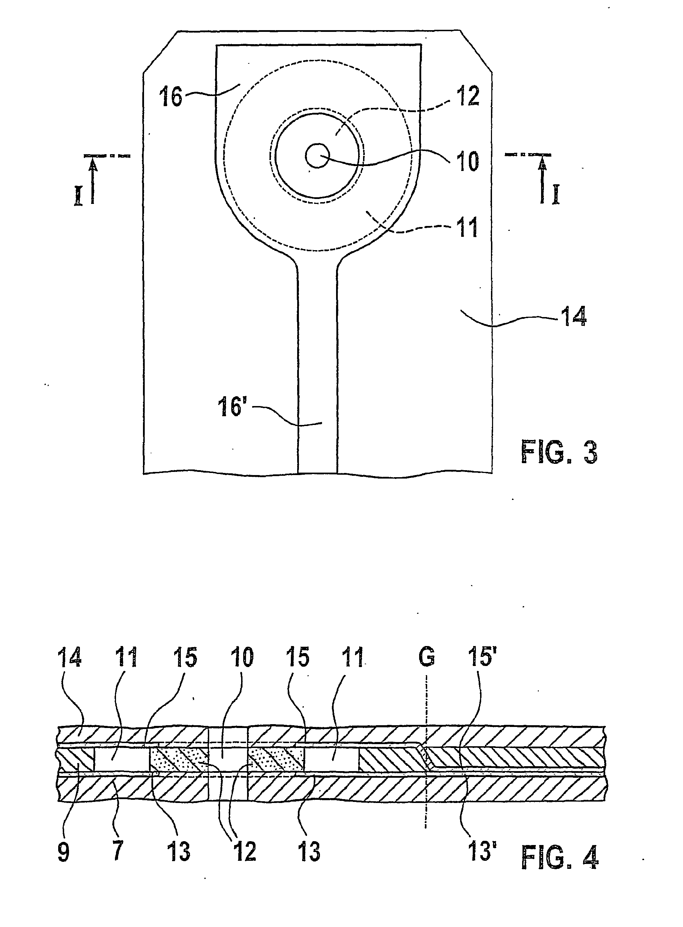

Bei den eingangs erwähnten schmalbandig arbeitenden Lambda-Sonden liegt die äußere Schutzschicht 17 oberhalb der Nernstelektrode 13, das heißt die Schichten 9 und 14 sowie die Pumpelektroden 15 und 16 entfallen gegenüber den Darstellungen in den Figuren 1 und 3. Die zwischen den Elektroden 8 und 13 abgreifbare elektrische Spannung ist dann, bei bekannten oder konstanten Sauerstoff-Partialdruck an der Referenzelektrode 8, ein Maß für den Sauerstoff-Partialdruck der Abgase.

Die Fig. 2 zeigt eine Draufsicht entsprechend dem Pfeil II in Fig. 1 auf die Festelektrolyt-Schicht 7. Auf die in Fig. 2 sichtbare Seite dieser Schicht 7 sind die Referenzelektrode 8 sowie eine daran anschließende Leiterbahn 8' aufgedruckt. Diese Leiterbahn 8' führt zu einer (nicht dargestellten) Durchkontaktierung, welche beispielsweise die Schicht 7 sowie die in Fig. 1 oberhalb der Schicht 7 liegenden Schichten durchsetzen und die Leiterbahn 8' mit einer außen am Körper 1 an dessen referenzluftseitigem Ende angeordneten Kontaktfahne (nicht dargestellt) elektrisch verbinden kann.

In Fig. 2 ist des weiteren strichliert die Lage des Referenzluftkanals 6 mit seinen im Bereich der Referenzelektrode 8 angeordneten Enden 6' dargestellt.

In Fig. 2 liegt die Leiterbahn 8' außerhalb des Referenzluftkanals 6. Damit wird die Leiterbahn 8' einem erhöhten Preßdruck ausgesetzt, wenn das Laminat des Körpers 1 vor bzw. bei der Sinterung gepreßt wird, um einen guten Zusammenhalt der Schichten des Laminates zu gewährleisten.

Während bei dieser Pressung oberhalb bzw. unterhalb des Referenzluftkanales 6 verminderte Preßdrücke auftreten, weil über den Hohlraum des Kanals 6 praktisch keine Kräfte übertragen werden können, ist in Bereichen neben dem Referenzluftkanal 6 immer ein hoher Druck gewährleistet, weil hier innerhalb des Laminates keine nennenswerten Kavitäten vorliegen.

Die vorgenannte Erhöhung des Preßdruckes an der Leiterbahn 8' wird besonders wirksam, wenn der Referenzluftkanal 6 innerhalb einer folienartigen Schicht 5 durch Stanzung hergestellt wird.

Abweichend von der Darstellung der Fig. 2 kann auch vorgesehen sein, anstelle der gabelförmigen Endbereiche 6' des Referenzluftkanales lediglich ein einziges, gegebenenfalls gegenüber dem übrigen Referenzluftkanal 6 verbreitertes Endstück unterhalb der Gaszutrittsöffnung 10 anzuordnen, die in diesem Falle als Sackloch ausgebildet sein muß, um eine Trennung vom Referenzluftkanal 6 gewährleisten zu können. Die Referenzelektrode 8 hat eine ähnliche Form wie das vorgenannte Endstück des Referenzluftkanales, derart, daß die Referenzelektrode 8 das vorgenannte Endestück des Referenzluftkanales 6 mit mehr oder weniger großem Übermaß überdeckt.

In Fig. 3 ist eine Draufsicht auf die Festelektrolyt-Schicht 14 entsprechend dem Pfeil III in Fig. 1 dargestellt.

Durch punktierte Linien wird die Lage des Ringraumes 11 sowie des porösen Materials 12 dargestellt, über das der Ringraum 11 mit dem Gaszutrittsloch 10 kommuniziert.

Auf die in Fig. 3 sichtbare Seite der Festelektrolyt-Schicht 14 ist die äußere Pumpelektrode 16 aufgedruckt. Diese besitzt eine der Ringform des Ringraumes 11 ähnliche ringförmige Ausgestaltung. Jedoch kann die äußere Pumpelektrode 16 insbesondere in Richtung des abgasseitigen Endes der Schicht 14 deutlich vergrößert sein und darüber hinaus auch zu den Längsseiten der Schicht 14 hin über die Grenzen des Ringraumes 11 hinausragen.

Durch diese Ausgestaltung kann bereits bei geringer Spannung zwischen den Pumpelektroden 15 und 16 eine gute Pumpwirkung erzielt werden, wobei gleichzeitig gewährleistet ist, daß sich eine eindeutige Proportionalität zwischen den LambdaWerten und dem Pumpstrom ergibt.

Die innere Pumpelektrode 15 kann eine ähnliche Form wie die äußere Pumpelektrode 16 aufweisen.

Darüber hinaus kann vorgesehen sein, das poröse Material 12 an Bereichen, die großflächigen Zonen der inneren bzw. äußeren Pumpelektrode 15,16 benachbart sind, mit in Radialrichtung zur Gaszutrittsöffnung 10 geringerer Breite anzuordnen. Auf diese Weise wird der Gaszutritt in die Ringkammer 11 an Zonen, in denen die Pumpelektroden 15 und 16 eine erhöhte Pumpwirkung haben, erleichtert.

Bei allen Elektroden kann vorgesehen sein, die zugehörigen Leiterbahnen mit besonders guter elektrischer Leitfähigkeit auszubilden.

Dies kann beispielsweise dadurch erreicht werden, daß das zum Drucken der Leiterbahnen verwendete Material einen erhöhten Platingehalt oder einen erhöhten Gehalt an sonstigen elektrisch gut leitenden Partikeln aufweist. Während die Elektroden für Gas permeabel sein müssen und deshalb drucktechnisch mit einem Partikelgemisch erzeugt werden, welches bei der Sinterung eine für Gase bzw. Ionen permeable elektrisch leitfähige Schicht bildet, braucht bei den Leiterbahnen eine Gasdurchlässigkeit nicht gewährleistet zu sein. Dementsprechend kann der Metallgehalt des Materials der Leiterbahnen erhöht sein. Beispielsweise kann das Elektrodenmaterial einen im Vergleich zum Platingehalt hohen Anteil an Zirkonoxid enthalten, während das Material der zugehörigen Leiterbahnen einen im Vergleich zum Platinanteil geringen Gehalt an Zirkonoxid besitzt.

Eine weitere Möglichkeit zur Erhöhung der elektrischen Leitfähigkeit der Leiterbahnen besteht darin, eine erhöhte Schichtdicke der Leiterbahnen vorzusehen. Dies kann beispielsweise dadurch erfolgen, daß die Leiterbahnen mit vergleichsweise grobmaschigen Netzen durch Siebdruck erzeugt werden.

Des weiteren besteht die Möglichkeit, die Leiterbahnen jeweils als Doppelschicht herzustellen, d.h. es können zwei leitfähige Schichten übereinander angeordnet bzw. gedruckt werden.

Die Fig. 4 zeigt einen Längsschnitt entsprechend der Schnittlinie IV-IV in Fig. 2 durch die Schichten 7,9 und 14.

Die auf der Schicht 9 sowie über der Kammer 11 angeordnete Nernstelektrode 13, deren Form in Draufsicht den Pumpelektroden 15 bzw. 16 ähneln kann, besitzt eine zugeordnete Leiterbahn 13', die an die Schicht 9 angrenzt und mit der Leiterbahn 15' der inneren Pumpelektrode 15 deckungsgleich ist, so daß die Leiterbahnen 15' und 13' eine Doppelschicht bilden.

Um eine derartige Anordnung zu ermöglichen, kann die Schicht 14 auf ihrer in Fig. 4 unteren Seite zunächst nur rechts einer Grenze G mit dem Material der Schicht 9 beschichtet werden. Nachfolgend wird dann die Elektrode 15 und die zugeordnete Leiterbahn 15' gedruckt, wobei dann in Bereich der Grenze G automatisch eine Verbindung zwischen der auf der Schicht 9 liegenden Leiterbahn 15' und der Elektrode 15 auf der Schicht 14 geschaffen wird.

Danach werden das poröse Material 12 sowie der noch fehlende Teil der Schicht 9 auf der Schicht 14 aufgedruckt bzw. aufgelagert.

Die Pumpelektrode 13 sowie die zugeordnete Leiterbahn 13' können auf die Schicht 7 aufgedruckt werden, die nachfolgend auf die Schicht 9 aufgelegt wird, wobei bei der späteren Sinterung des Laminates die Leiterbahnen 15' und 13' zusammengesintert werden.

Insbesondere dann, wenn der Referenzluftkanal 6 innerhalb der Schicht 5 durch Stanzung hergestellt wird, können - abweichend von den Darstellungen der Fig. 3 und 4 - die Leiterbahnen (z.B. 13',15',16') aller Elektroden außermittig auf den jeweiligen Schichten des Laminates angeordnet sein, derart, daß im Draufsicht auf die Schichtebenen keine Überdeckung mit dem Referenzluftkanal 6 auftreten kann und das Material der Leiterbahnen durch Pressung des Laminates besonders wirksam und unter Verbesserung der elektrischen Leitfähigkeit kompaktifiziert werden kann, wie es oben anhand der Fig. 2 für die Leiterbahn 8' der Referenzelektrode 8 beispielhaft erläutert wurde.

## Patentansprüche

1. Gassensor, insbesondere Lambda-Sonde, mit als gesintertes Keramik-Laminat ausgebildetem Körper (1) und darin innerhalb einer Schicht (5) des Laminates angeordnetem Referenzluftkanal (6), auf dessen einer Seite eine elektrische Widerstandsheizung (4) und auf dessen anderer Seite eine Elektrodenanordnung (8,13;15,16) vorgesehen ist, welche zumindest eine innenseitig einer Begrenzungswand des Referenzluftkanals (6) angeordnete, zumindest bereichsweise für Gase permeable Referenzelektrode (8) und eine vom zu sensierenden Gas beaufschlagbare Nernstelektrode (13) aufweist, die ebenfalls zumindest bereichsweise für Gase permeabel ausgebildet und von der Referenzelektrode (8) durch eine für Ionen, insbesondere Sauerstoffionen, leitfähige und permeable Festelektrolytschicht (7) getrennt ist, wobei die Nernstelektrode (13) an einer gesonderten Kammer (11) angeordnet ist, welche mit dem Abgasstrom über eine im Körper (1) angeordnete Diffusionsstrecke (12) kommuniziert, und innerhalb dieser Kammer (11) eine innere Pumpelektrode (15) angeordnet ist, die durch eine Festelektrolytschicht (14) mit einer äußeren Pumpelektrode (16) zusammenwirkt, welche dem Abgasstrom weitestgehend unmittelbar ausgesetzt ist, **dadurch gekennzeichnet, dass** die innere Pumpelektrode (15) in Draufsicht auf die Schichtebenen des Laminates über die Grenzen der Kammer (11) hinaus erstreckt ist.

2. Gassensor nach Anspruch 1, **dadurch gekennzeichnet, dass** die Elektroden (8,13;15,16) an Leiterbahnen (8',13',15',16') angeschlossen sind, die sich im wesentlichen parallel zum Referenzluftkanal (6) erstrecken und dass die Leiterbahnen (8',13',15',16') in Draufsicht auf die Schichtebenen des Laminates zumindest teilweise neben dem Referenzluftkanal (6) angeordnet sind.

3. Gassensor nach Anspruch 1, **dadurch gekennzeichnet, dass** zumindest eine der Pumpelektroden (15, 16) und/ oder die Nernstelektrode (13) in Draufsicht außerhalb oder Kammer (11) einen großflächigen Bereich aufweist, welcher sich in Richtung des abgasseitigen, heißen Endes des Körpers (1) erstreckt.

4. Gassensor nach einem der vorhergehenden Ansprüche, **dadurch gekennzeichnet, dass** an die Elektroden (8,13,15,16) anschließende Leiterbahnen (8',13',15',16') eine gegenüber den Elektroden erhöhte elektrische Leitfähigkeit aufweise.

5. Gassensor nach Anspruch 4, **dadurch gekennzeichnet, dass** die Leiterbahnen gegenüber den Elektroden einen erhöhten Metall- bzw. Platingehalt aufweisen.

6. Gassensor nach Anspruch 4 oder 5, **dadurch gekenntzeichnet, dass** die Leiterbahnen mit gegenüber den Elektroden erhöhter Dicke angeordnet sind.

7. Gassensor nach einem der Ansprüche 4 bis 6, **dadurch gekennzeichnet, dass** Leiterbahnen als Doppelschicht ausgebildet sind.

## Claims

1. Gas sensor, in particular a lambda probe, having a body (1) embodied as a sintered ceramic laminate and a reference air duct (6) arranged therein within a layer (5) of the laminate, an electrical resistance heating system (4) being provided on one side of said reference air duct and an electrode arrangement (8, 13; 15, 16) being provided on the other side of said reference air duct, said electrode arrangement having at least one reference electrode (8), which is arranged on the inner side of a boundary wall of the reference air duct (6) and is permeable to gases at least in regions, and a Nernst electrode (13), which can be acted upon by the gas to be sensed, is likewise embodied as permeable to gases at least in regions and is separated from the reference electrode (8) by a solid electrolyte layer (7) which is permeable and conductive for ions, in particular oxygen ions, wherein the Nernst electrode (13) is arranged at a separate chamber (11), which communicates with the exhaust gas stream via a diffusion path (12) arranged in the body (1), and an internal pump electrode (15) is arranged within said chamber (11), said internal pump electrode interacting by means of a solid electrolyte layer (14) with an external pump electrode (16), which is exposed to the exhaust gas stream as directly as possible, **characterized in that** the internal pump electrode (15) is extended beyond the boundaries of the chamber (11) in a plan view of the layer planes of the laminate.

2. Gas sensor according to Claim 1, **characterized in that** the electrodes (8, 13; 15, 16) are connected to conductor tracks (8', 13', 15', 16') extending essentially parallel to the reference air duct (6), and **in that** the conductor tracks (8', 13', 15', 16') are arranged at least partly alongside the reference air duct (6) in a plan view of the layer planes of the laminate.

3. Gas sensor according to Claim 1, **characterized in that** at least one of the pump electrodes (15, 16) and/or the Nernst electrode (13) has in a plan view outside the chamber (11) a large-area region extending in the direction of the hot end of the body (1) on the exhaust gas side.

4. Gas sensor according to any of the preceding claims, **characterized in that** conductor tracks (8', 13', 15', 16') connected to the electrodes (8, 13, 15, 16) have an increased electrical conductivity by comparison with the electrodes.

5. Gas sensor according to Claim 4, **characterized in that** the conductor tracks have an increased metal or platinum content by comparison with the electrodes.

6. Gas sensor according to Claim 4 or 5, **characterized in that** the conductor tracks are arranged with an increased thickness by comparison with the electrodes.

7. Gas sensor according to any of Claims 4 to 6, **characterized in that** conductor tracks are embodied as a double layer.

## Revendications

1. Capteur de gaz, notamment sonde lambda, comprenant un corps (1) réalisé sous forme de stratifié en céramique frittée, et un canal d'air de référence (6) disposé dans celui-ci à l'intérieur d'une couche (5) du stratifié, sur un côté duquel est prévu un chauffage à résistance électrique (4) et sur l'autre côté duquel est prévu un agencement d'électrodes (8, 13 ; 15, 16) qui présente au moins une électrode de référence (8) perméable aux gaz au moins en partie, disposée du côté intérieur d'une paroi de limitation du canal d'air de référence (6), et une électrode de Nernst (13) pouvant être sollicitée par du gaz à capteur, qui est également réalisée au moins en partie de manière perméable aux gaz et qui est séparée de l'électrode de référence (8) par une couche d'électrolyte solide (7) conductrice et perméable pour les ions, en particulier les ions oxygène, l'électrode de Nernst (13) étant disposée sur une chambre séparée (11) qui communique avec le courant de gaz d'échappement par le biais d'une section de diffusion (12) disposée dans le corps (1) et une électrode de pompe (15) étant disposée à l'intérieur de cette chambre (11), laquelle coopère par une couche d'électrolyte solide (14) avec une électrode de pompe extérieure (16), qui est largement exposée directement au courant de gaz d'échappement, **caractérisé en ce que** l'électrode de pompe intérieure (15) s'étend en vue de dessus sur les plans des couches du stratifié au-delà des limites de la chambre (11).

2. Capteur de gaz selon la revendication 1, **caractérisé en ce que** les électrodes (8, 13 ; 15, 16) sont raccordées à des pistes conductrices (8', 13', 15', 16') qui s'étendent essentiellement parallèlement au canal d'air de référence (6) et **en ce que** les pistes conductrices (8', 13', 15', 16') sont disposées, en vue de dessus sur les plans des couches du stratifié au moins en partie à côté du canal d'air de référence (6).

3. Capteur de gaz selon la revendication 1, **caractérisé en ce qu'**au moins l'une des électrodes de pompe (15, 16) et/ou l'électrode de Nernst (13) présentent, en vue de dessus en dehors de la chambre (11), une région de grande surface qui s'étend dans la direction de l'extrémité chaude du corps (1) du côté du gaz d'échappement.

4. Capteur de gaz selon l'une quelconque des revendications précédentes, **caractérisé en ce que** les pistes conductrices (8', 13', 15', 16') se raccordant aux électrodes (8, 13, 15, 16) présente une conductibilité électrique accrue par rapport aux électrodes.

5. Capteur de gaz selon la revendication 4, **caractérisé en ce que** les pistes conductrices présentent, par rapport aux électrodes, une teneur en métal ou en platine accrue.

6. Capteur de gaz selon la revendication 4 ou 5, **caractérisé en ce que** les pistes conductrices sont disposées avec une épaisseur accrue par rapport aux électrodes.

7. Capteur de gaz selon l'une quelconque des revendications 4 à 6, **caractérisé en ce que** les pistes conductrices sont réalisées sous forme de double couche.
